# EUROPEAN PATENT SPECIFICATION

(11) **EP 2 999 909 B1**
(45) Date of publication and mention of the grant of the patent: **21.06.2017**
(21) Application number: 13725904.0
(22) Date of filing: 21.05.2013
(51) Int. Cl.: F16L 41/06, F16L 41/12, F16L 41/16

(54) **A TAPPING CONNECTOR AND USE OF A TAPPING CONNECTOR**
ABZWEIGVERBINDER UND VERWENDUNG EINES ABZWEIGVERBINDERS
CONNECTEUR DE PIQUAGE ET UTILISATION D'UN CONNECTEUR DE PIQUAGE

(43) Date of publication of application: 30.03.2016
(73) Proprietor: AVK Holding A/S, 8464 Galten (DK)
(72) Inventor: FREUDENDAHL, Erling Arnum, DK-8464 Galten (DK)
(74) Representative: Patentgruppen A/S
(86) International application number: PCT/DK2013/050153
(87) International publication number: WO 2014/187460

(56) References cited:
- DE-U1-202007 010 596
- DE-U1-202008 000 732
- ES-A1- 2 349 971
- FR-A1- 2 744 783
- FR-A1- 2 807 492

## Description

### Field of the Invention

The present invention relates to a tapping connector for mounting on a pipe and for tapping a pipe and use of a tapping connector.

### Background of the Invention

Tapping connectors - also called tapping saddles, branch connectors, pipe drill clams and other - are generally used for drilling and tapping a pipe holding a pressurised fluid i.e. the tapping connector is used for fixating drilling equipment while making a hole in the pressurised pipe and for subsequently connection of a more or less permanent branch pipe.

The tapping connector is typically strapped or clamped around a pressurised pipe so that a branch opening in the tapping connector extends substantially perpendicularly from the pipe all the way through the tapping connector. Drilling equipment is then temporarily mounted on tapping connector so that a hole can be drilled in the pipe. The drill is then retracted and a spatula-like plate is inserted in a slit in the tapping connector to block the flow through the tapping connector while the drilling equipment is removed. A branch pipe is now connected to the tapping connector and the plate is removed to establish flow in the branch pipe. The slit in the tapping connector is then sealed either permanently or more likely so that the plate can be reinserted e.g. during maintenance or repair at a later time.

To ensure that the slit in the tapping connector is substantially tight both with or without the spatula inserted, it is from ES 2 744 783 known to form an insertion part from a rubber material and insert it in the tapping connector so that an upper part of the rubber insertion part presses against the underside of the plate while a bottom part of the insertion part seals the gap between the tapping connector and the pressurised pipe. But the dual functionality of the insertion part makes it difficult to control how well the slit is sealed and how much force that has to be applied to insert and retract the spatula. Furthermore this design only seals against the underside of the spatula and is therefore not suited if the spatula is used for blocking a pressurised branch pipe from the main pipe.

From ES 2 349 971 it is therefore known to provide a gasket on both sides of the slit. The upper gasket is placed in the casted saddle part and the bottom gasket is placed on an insertion part, which along with a bottom sealing part, is inserted in the saddle part. However, this design makes it difficult to control how hard the gaskets press against each other and/or the plate. The gaskets could therefore either be pressing so hard against each other that it is difficult or even impossible to insert or remove the plate or they press too little against each other making the seal leaks.

It is therefore an object of the present invention to provide for a tapping connector in which the sealing of the slit in the tapping connector can be controlled more precisely and/or in a more cost-efficient manner.

### The invention

The invention relates to a tapping connector according to the technical features of claim 1. Placing both the upper gasket and the lower gasket in separate insertion parts is advantageous in that it is fairly easy to manufacture these parts with such high tolerance that the gaskets can be mounted with a mutual tolerance that ensures a sufficient seal - with or without the spatula means - and ensures that a predictable amount of force has to be used for mounting and removing the spatula means. Thus, this design ensures that as long as the mutual tolerance between the insertion parts is maintained low, the saddle part itself can be made with relatively rough tolerances in that this will only affect the position of the slit between the gaskets and not the size of it.

It should be noted that all references to direction - i.e. upper, lower, bottom etc. - are relative to each other in relation to the pressurised pipe. I.e. the part being closest to the pressurised pipe on which the tapping connector is to be connected is named lower and/or bottom no matter which direction the tapping connector is mounted in. Thus, even if the tapping connector is pointing downwards the lower insertion part is the insertion part closest to the pressurised pipe and the upper insertion part is the next one in a downwards direction.

It should also be noted that in this context the term "spatula means" should be understood as any kind of plate, disc or other similar objects either being flat or curved and being suited for being inserted in between two gaskets to block a flow through a tapping connector.

In an aspect of the invention, said upper insertion part comprises a substantially radial extending upper abutting face adapted to abut a corresponding substantially radial extending lower abutting face on said lower insertion part.

Forming the abutting faces on the insertion parts as corresponding substantially radial extending faces is advantageous in that it ensures solid connection surfaces between the insertion parts - thus ensuring a high and constant tolerance of the distance between the gaskets even if a substantial external force is pressing the insertion parts together.

In an aspect of the invention, said tapping connector further comprises a bottom gasket arranged to seal a bottom gap between said lower insertion part and said pipe.

Providing the tapping connector with a bottom gasket is advantageous in that it hereby is possible to seal the gap between the lower insertion part and the pressurised pipe and forming it as a separate part is advantageous in that hereby is easier to manufacture and fit in/on the tapping connector.

In an aspect of the invention, said upper gasket and said lower gasket are arranged to face each other between said upper insertion part and said lower insertion part in said through-going branch opening.

It is advantageous to orient the gaskets against each other in that this ensures a stronger and more predictable seal.

In an aspect of the invention, said tapping connector comprises upper sealing means arranged in an upper gap between said upper insertion part and said saddle part to seal said upper gap.

Placing sealing means in the upper gap between the upper insertion part and the saddle part is advantageous in that this sealing means can seal the gap while at the same time compensating for any manufacturing imprecisions between the parts.

In an aspect of the invention, said upper insertion part and said lower insertion part comprise a mutual insertion part rotational interlocking arrangement substantially preventing said upper insertion part and said lower insertion part from rotating in relation to each other.

Even though the upper insertion part and the lower insertion part lie close against each other, a slit facing the spatula opening has to be formed for the spatula means to be inserted between the gaskets. This slit could advantageously be formed by a carving or an indentation in both parts. It is therefore important that these carvings are mutually aligned and it is therefore advantageous to lock the upper insertion part and the lower insertion part against mutual rotation by means of an interlocking arrangement.

In an aspect of the invention, said upper insertion part and/or said lower insertion part comprises a saddle part rotational interlocking arrangement substantially preventing said upper insertion part and/or said lower insertion part from rotating in relation to said saddle part.

If a slit is arrange in one or both of the insertion part it is important that this slit is rotationally aligned with the spatula opening and it is therefore advantageous that the upper insertion part and/or the lower insertion part is formed with a saddle part rotational interlocking arrangement e.g. interlocking with a corresponding arrangement on the saddle part to prevent the upper insertion part and/or the lower insertion part from rotating in relation to the saddle part.

In an aspect of the invention, said lower insertion part comprises an axial movement locking device substantially locking said lower insertion part from axial movements in relation to said through-going branch opening in said saddle part.

It is easier to store, transport, handle and mount the tapping connector is all the parts are held together. Thus it is advantageous to provide lower insertion part with an axial movement locking device so that a certain amount of force is required to remove the lower insertion part from the saddle part. And placing it on the lower insertion part is advantageous in that the lower insertion part will then also keep the upper insertion part in place.

In an aspect of the invention, said lower insertion part and/or said upper insertion part are formed by injection moulding.

Since the saddle part is heavily strained by being clamped around the pipe the saddle part is typically made from cast iron or another form of metal giving it relatively large dimension variations. However, the insertion parts are not strained as much and since they require a much higher tolerance - to ensure uniform gasket pressure - injection moulding is advantageous in that this production method is inexpensive and produces very uniform products.

In an aspect of the invention, said saddle part and said clamp part completely encircles said pipe.

Hereby is achieved an advantageous embodiment of the invention.

In an aspect of the invention, at least an upper part of said through-going branch opening comprises internal thread for connecting to drilling equipment and/or a branch pipe.

Providing the through-going branch opening with thread is advantageous in that it hereby is easy to attach the drilling equipment and/or a branch pipe precisely to the saddle part and providing the thread internally is advantageous in that the thread is thereby more protected.

In an aspect of the invention, said upper insertion part and said lower insertion part extends substantially all the way through said through-going branch opening.

Hereby is achieved an advantageous embodiment of the invention.

In an aspect of the invention, at least an upper part of said upper insertion part comprises internal thread for connecting to drilling equipment and/or a branch pipe.

Since the saddle part is heavily strained in use it is typically made from cast iron to reduce cost but the objects made from this manufacturing method are typically not very uniform and it can be difficult to form a functioning internal thread in such a part without subsequent machining - which will increase the cost of the part. However, since the upper insertion part is not particularly strained it can be made by a manufacturing method providing much more uniform and precise products and it is therefore advantageous to form the internal thread in the upper insertion part instead of in the saddle part.

In an aspect of the invention, at least an upper part of said through-going branch opening comprises threadless connection means for connecting to drilling equipment and/or a branch pipe.

Threaded connections - particularly in relation to cast iron parts - are difficult to surface coat properly and the risk of subsequent corrosion is increased. Thus, it is advantageous to attach the branch pipe to the saddle part by means of threadless connection means.

It should be noted that threadless connection means include any kind of connection means where the mutual connection is not made by means of interlocking threads but instead depends on e.g. a bayonet lock, a locking ring, a taper lock or any other type of locking device suited for locking and sealing a connecting between a saddle part and drilling equipment and/or a branch pipe.

The invention also relates to use of a tapping connector according to any of the previously described tapping connectors, in which said tapping connector is used for mounting and tapping a pipe comprising pressurized fluid.

In an aspect of the invention, said fluid is a liquid.

### Figures

The invention will be explained further herein below with reference to the figures in which:
- Fig. 1: shows a tapping connector clamping a pressurised pipe, as seen from the front,
- Fig. 2: shows an exploded view of a tapping connector, as shown in perspective,
- Fig. 3: shows a cross section through a tapping connector provided with spatula opening blocking means, as seen from the side,
- Fig. 4: shows a cross section through a tapping connector provided with spatula means, as seen from the side,
- Fig. 5: shows a partial cross section through a tapping connector comprising a saddle part with internal thread, as seen from the front, and
- Fig. 6: shows a partial cross section through a tapping connector comprising an upper insertion part with internal thread, as seen from the front.

### Detailed description

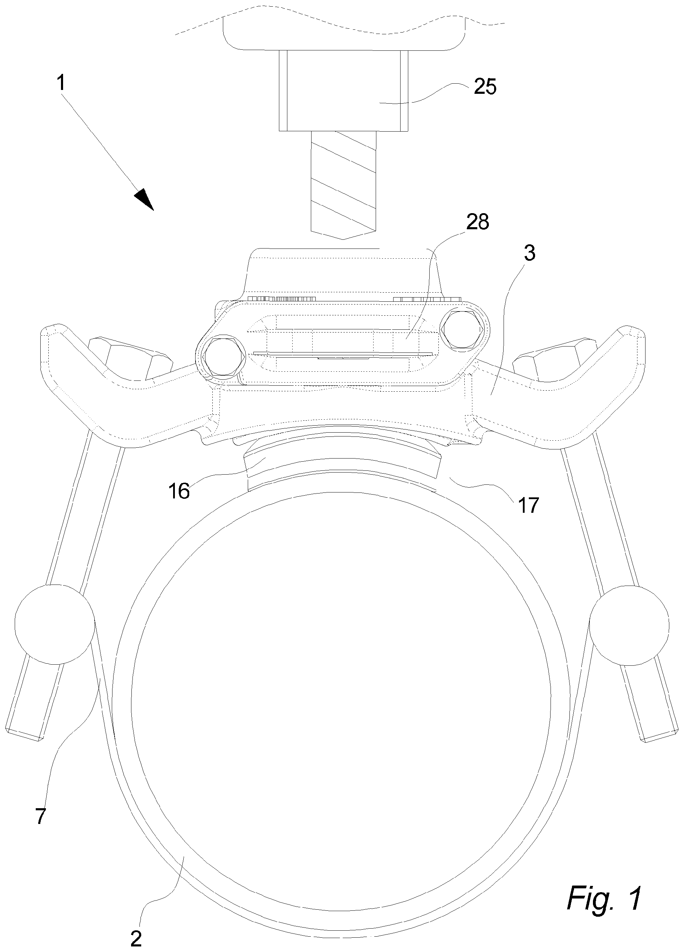

Figure 1 shows a tapping connector 1 clamping a pressurised pipe 2, as seen from the front.

In this embodiment the tapping connector 1 is mounted on a cylindrical pipe 2 holding pressurised water. However in another embodiment the pipe 2 could be oval, polygonal or have another shape and the pipe 2 could be pressurised by slurry, sewage, oil or another liquid and it could be pressurised by a gas such as air, natural gas, Carbon dioxide or other.

In this embodiment the tapping connector 1 comprises a saddle part 3 and a clamp part 7 which together encircles the pipe 2. However, in another embodiment the saddle part 3 and/or the clamp part 7 could be subdivided into subparts or further parts could be inserted between the saddle part 3 and the clamp part 7.

The clamping effect of the tapping connector 1 can be enabled in numerous ways but in this embodiment the saddle part 3 is placed on the pressurised pipe 2 where after the clamp part 7 is mounted and tightened to securely fixate the tapping connector 1 on the pipe 2 and to ensure that the bottom gasket 16 is pressed firmly against the pipe 2 to provide a strong seal between the tapping connector 1 and the pipe 2.

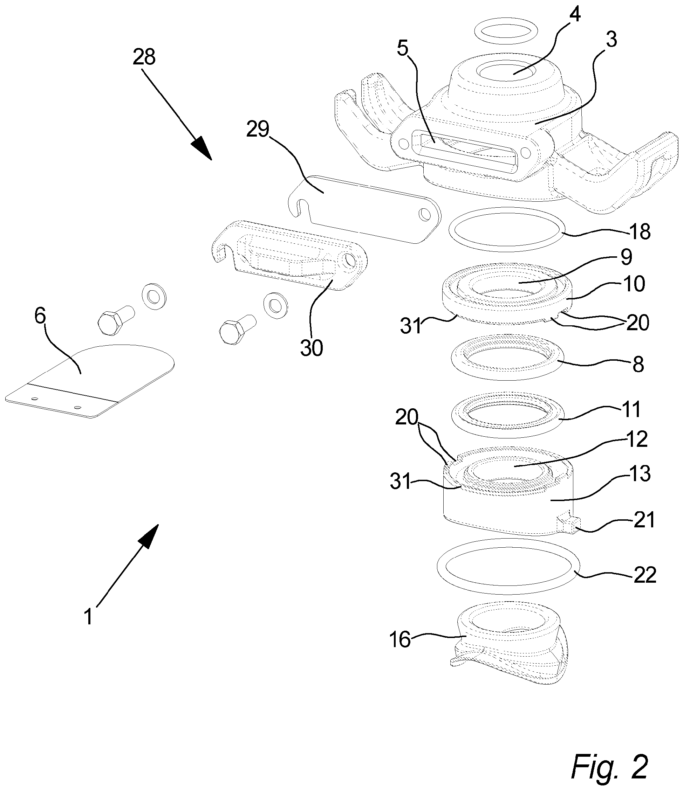

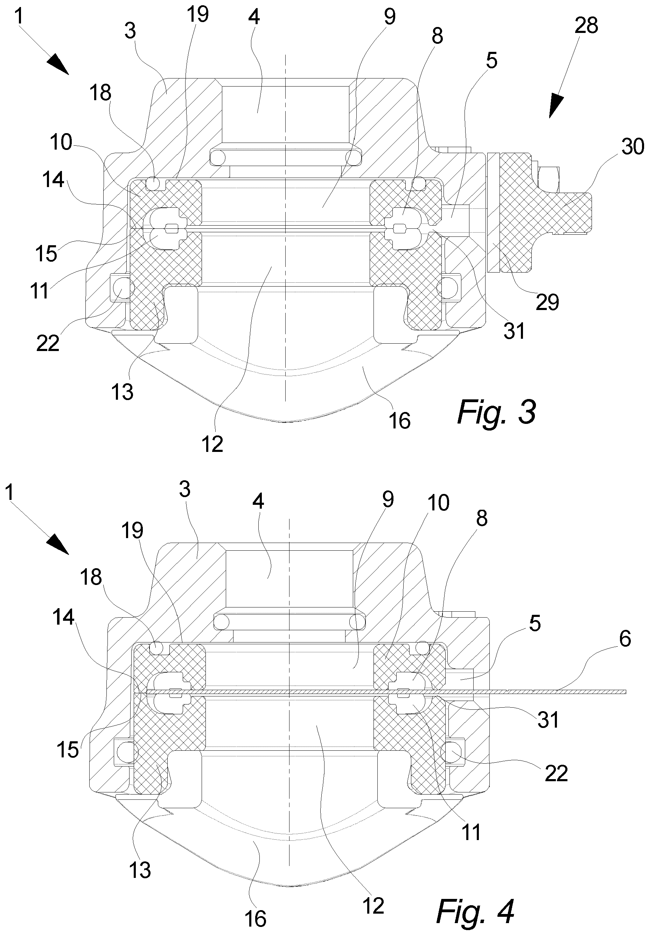

Once the tapping connector 1 is securely fixed on the pipe 1, drilling equipment 25 is mounted temporarily on the tapping connector 1. However, in another embodiment the drilling equipment 25 could also or instead be mounted on the pipe 2 or an external fixture. The drilling equipment 25 then drills a hole in the pressurised pipe while ensuring a seal between the tapping connector 1 and the drilling equipment 25. The drill is then retracted and spatula means 6 (see fig. 2 and 4) is then inserted in a spatula opening 5 in the saddle part 3 to block flow through the tapping connector 1 while the drilling equipment 25 is removed and a branch pipe 26 (not shown) is mounted on the tapping connector 1. The spatula means 6 is now removed to create flow through the tapping connector 1 and into the branch pipe 26 where after the spatula opening 5 is sealed by spatula opening blocking means 28.

If flow from the pipe 2 into the branch pipe 26 or flow from the branch pipe 26 into the pipe 2 ever needs to be blocked in the future e.g. in relation with repair or replacement of pipes, valves or other, the spatula opening blocking means 28 can be removed and the spatula means 6 can be inserted again.

Fig. 2 shows an exploded view of a tapping connector 1, as shown in perspective. In this embodiment the tapping connector 1 is shown without the clamp part 7.

The tapping connector 1 according to the present invention can be formed in numerous ways but in this embodiment the tapping connector 1 comprises a saddle part 3 including a through-going branch opening 4 and a spatula opening 5 arranged to intersect the branch opening 4. In this embodiment the spatula opening blocking means 28 comprises a sealing disc 29 and a sealing lid 30 formed to be arranged over the spatula opening 5 - to seal it - where it is fixed by means of bolts screwed into corresponding bolt holes in the saddle part 3. However in another embodiment the spatula opening blocking means 28 could be fixed by means of rivets, adhesive, welding or in another way or the spatula opening 5 could be sealed in another way such as by means of a plug, by welding or other.

When flow through the saddle part 3 needs to be blocked the spatula means 6 can be inserted into the spatula opening 5 when the spatula opening blocking means 28 is removed. In this embodiment the spatula means 6 is formed as a plate but in another embodiment the spatula means 6 could comprise a handle, it could comprise means for sealing the spatula opening 5 when mounted and/or it could be integrated in the saddle part 3 e.g. by means allowing linear and/or rotational displacement.

From the saddle part 3 and downwards the tapping connector 1 does in this embodiment also include: upper sealing means 18, upper insertion part 10, upper gasket 8, lower gasket 11, lower insertion part 13, axial movement locking device 22 and bottom gasket 16.

In this embodiment an insertion part rotational interlocking arrangement 20 is arranged between the upper insertion part 10 and the lower insertion part 13 to ensure that the front slits 31 in the insertion parts 10, 13 are aligned at all times to allow the spatula means 6 to be inserted into the insertion parts 10, 13 even when these are arranged close together. In this embodiment the insertion part rotational interlocking arrangement 20 is formed by a protrusion and indentation in the upper insertion part 10 matching a corresponding protrusion and indentation in the lower insertion part 13. However in another embodiment the insertion part rotational interlocking arrangement 20 could be formed by means of adhesive, bolts, screws, rivets, pins or other.

In this embodiment an saddle part rotational interlocking arrangement 21 is arranged between the lower insertion part 13 and the saddle part 3 e.g. to ensure that the front slit 31 in the insertion parts 10, 13 at all times are aligned with the spatula opening 5 in the saddle part 3. In this embodiment the saddle part rotational interlocking arrangement 21 is formed by a protrusion on the side of the lower insertion part 13 matching a corresponding indentation in the saddle part 13. However in another embodiment the saddle part rotational interlocking arrangement 21 could be formed by means of adhesive, bolts, screws, rivets, pins or other.

Fig. 3 shows a cross section through a tapping connector 1 provided with spatula opening blocking means 28, as seen from the side.

In this embodiment an upper gasket 8 is mounted on an upper insertion part 10 and a lower gasket 11 is mounted on lower insertion part 13 where after both insertion parts 10, 13 are inserted in the through-going branch opening 4 in axial succession of each other.

The gaskets 8, 11 are in this embodiment arranged to face each other - in fact they press relatively firmly against each other to seal the slit 31 between the insertion parts 10, 13. The gaskets 8, 11 are arranged so that the contact surface between the two are axially aligned with the spatula opening 5 so that spatula means 6 inserted into the spatula opening 5 can also be pushed in between the gaskets 8, 11.

The gaskets 8, 11 are in this embodiment arranged in corresponding tracks in the respective insertions parts 10, 13 so that axial displacement of the gaskets 8, 11 is restricted by the insertion parts 10, 13. The mutual distance between the insertion parts 10, 13 is fixed by letting the upper insertion part 10 comprise a upper abutting face 14 and the lower insertion part 13 comprise a lower abutting face 15 which are pressed firmly against each other in use by the clamping force pressing the saddle part 3 downwards against the pipe 2 (not shown in this figure) so that the bottom gasket 16 presses against the lower insertion part 13 which - through the abutting faces 14, 15 - presses against the upper insertion part 10 which in is pressed against the saddle part 3. Thus, by this design the clamping forces are - through the abutting faces 14, 15 - directed around the gaskets 8, 11 so that the force with which they press against each other is unaffected by the size of the clamping force. Thus, the sealing quality of the gaskets 8, 11 and thus the force it takes to insert the spatula means 6 in between the gaskets 8, 11 - to block flow through the tapping connector 1 - and remove it again is substantially the same no matter how hard the saddle part 3 is pressing against the pipe 2. And since the insertion parts 10, 13 are only strained by the clamping force traveling substantially axially through them, they can be formed in an inexpensive and dimensionally stable plastic material e.g. by injection moulding or automated machining from rod/pipe material, or they could be made from another material that is less strong than the material that the saddle part 3 is made from, such as brass or aluminium. And even if the saddle part 3 and one or both of the insertion parts 10, 13 was made from the same material, such as cast iron, steel, stainless steel, a composite material, plastic or other or any combination these and/or the previously mentioned materials, the present design is still advantageous in that it would be much easier to machine only the insertion parts 10, 13 to archive the desired pressure force between the gaskets 8, 11 than to machine inside the large saddle part 3.

Furthermore, to reduce the cost of the saddle part 3 this part is typically made from cast iron and even if it was advantageous to machine this part is would still have to be provided with an anticorrosion coating and possible paint and it would therefore still be very difficult to control the force with which the gaskets press against each other if the space available for the gaskets 8, 11 was not fixed by the insertion parts 10, 13.

In this embodiment cross sectional shape of the gaskets 8, 11 are relatively complex to ensure that the gaskets 8, 11 can be mounted on the respective insertion parts 10, 13 and to ensure a strong seal no matter is the spatula means 6 is inserted or not. But in another embodiment the gaskets 8, 11 could be formed differently e.g. to adapt to different spatula means 6 or other or the gaskets 8, 11 could simply be formed as O-rings.

In this embodiment the gaskets 8, 11 are formed identical from the same rubber material but in another embodiment the gaskets 8, 11 could be formed different from each other and/or from different material such as synthetic rubber, flexible plastic material, a flexible composite material, metal formed with a flexible shape such as a disk spring, a cup spring or the like or any combination of the above.

In this embodiment an O-ring is provided as upper sealing means 18 sealing a possible upper gap 19 between the upper insertion part 10 and the saddle part 3 e.g. originating from the fact that the surface of the saddle part 3 is relatively uneven due to the production method - e.g. casting - and /or succeeding surface coating while the surface of the upper insertion part 10 is relatively smooth and even due to the production method - e.g. injection moulding or machining - and since the upper insertion part 10 is relatively small and only exposed to little strain it is economically and technically feasible to make this part from a material that does not need succeeding surface coating to be durable, such as brass, stainless steel, a plastic material or other.

However, in another embodiment the upper sealing means 18 could be formed differently e.g. in the form of a liquid or semi-liquid gasket, adhesive, a flexible disk or other or it could be omitted.

In this embodiment the lower insertion part 13 is provided with an axial movement locking device 22 arranged to substantially lock the lower insertion part 13 from axial movements in relation to the saddle part 3 i.e. to ensure that it takes a certain amount of force to move the lower insertion part 13 axially in the through-going branch opening 4 in the saddle part 3. The axial movement locking device 22 could also or instead function as a device for sealing between the lower insertion part 13 and the saddle part 3.

In this embodiment the axial movement locking device 22 is formed as a simple O-ring but in another embodiment the axial fixation of the lower insertion part 13 could be obtained through other embodiments of the axial movement locking device 22, such as inter locking design of the parts 3, 13, adhesive, attachment means or other.

In this embodiment the spatula opening is sealed by means of spatula opening blocking means 28 in the form of a sealing disc 29 and a sealing lid 30.

Fig. 4 shows a cross section through a tapping connector 1 provided with spatula means 6, as seen from the side.

In this embodiment the spatula opening blocking means 28 has been removed and the spatula means 6 have been inserted in through the spatula opening 5, the slit 31 formed between the insertion parts 10, 13 at the spatula opening 5 and in between the gaskets 8, 11 to temporarily block the flow through the through-going branch opening 4 in the saddle part 3.

The spatula opening 5 is in this embodiment formed so large that the spatula means 6 still may be inserted between the gaskets 8, 11 even if the axial position of the insertion parts 10, 13 should vary within a millimetre or two due to the relatively large tolerances of the saddle part 3.

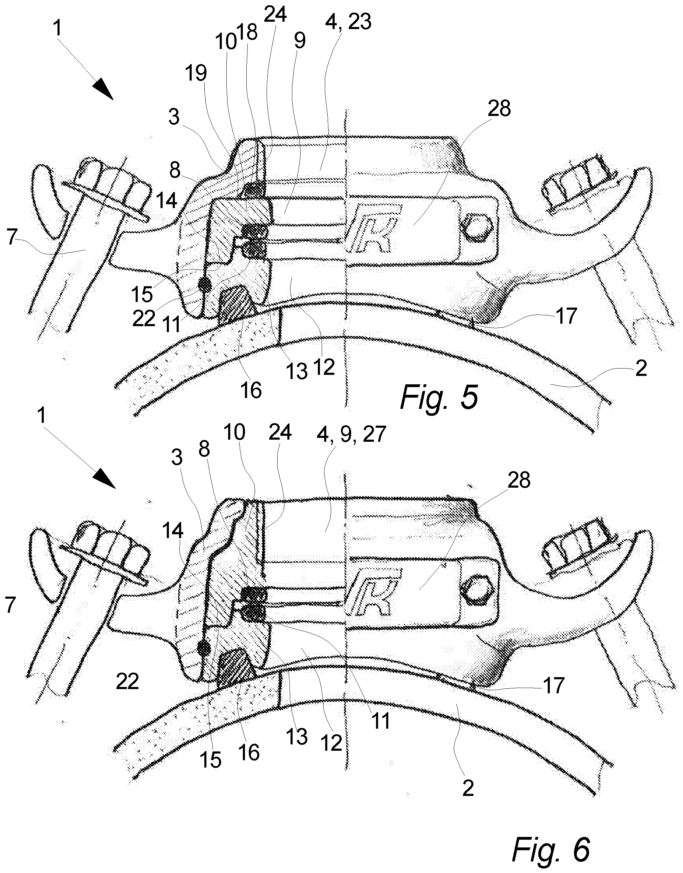

Fig. 5 shows a partial cross section through a tapping connector 1 comprising a saddle part 3 with internal thread 24, as seen from the front.

In this embodiment the upper part 23 of the through-going branch opening 23 is provided with internal thread 24 to enable that drilling equipment can be easily mounted and removed again and to ensure that a branch pipe can be securely fixed.

Fig. 6 shows a partial cross section through a tapping connector 1 comprising an upper insertion part 10 with internal thread 24, as seen from the front.

In this embodiment the insertion parts 10, 13 extend all the way through the through-going branch opening 23 in the saddle part 3. Thus, in this embodiment the upper part 27 of the upper insertion part 10 is provided with internal thread 24. However, in another embodiment the saddle part 3 could also or instead be provided with external thread and/or the drilling equipment and/or the branch pipe may be connected to the tapping connector in another way such as by means of a taper fit, a flange connection comprising some sort of attachment means, adhesive or other or any combination thereof.

In the foregoing, the invention is described in relation to specific embodiments of tapping connectors 1, saddle parts 3, insertion parts 10, 13 and other as shown in the drawings, but it is readily understood by a person skilled in the art that the invention can be varied in numerous ways within the scope of the appended claims.

**List**

| | | | |
|---|---|---|---|
| 1. | Tapping connector | 20. | Insertion part rotational interlocking arrangement |
| 2. | Pipe | | |
| 3. | Saddle part | 21. | Saddle part rotational interlocking arrangement |
| 4. | Branch opening | | |
| 5. | Spatula opening | 22. | Axial movement locking device |
| 6. | Spatula means | | |
| 7. | Clamp part | 23. | Upper part of through-going branch opening |
| 8. | Upper gasket | | |
| 9. | Upper insertion opening | 24. | Internal thread |
| 10. | Upper insertion part | 25. | Drilling equipment |
| 11. | Lower gasket | 26. | Branch pipe |
| 12. | Lower insertion opening | 27. | Upper part of upper insertion part |
| 13. | Lower insertion part | | |
| 14. | Upper abutting face | 28. | Spatula opening blocking means |
| 15. | Lower abutting face | | |
| 16. | Bottom gasket | 29. | Sealing disk |
| 17. | Bottom gap | 30. | Sealing lid |
| 18. | Upper sealing means | 32. | Slit |
| 19. | Upper gap | | |

## Claims

1. A tapping connector (1) for mounting on and tapping a pipe (2), said connector (1) comprising
a saddle part (3) including a through-going branch opening (4) and a spatula opening (5),
spatula means (6) arranged to be inserted into said saddle part (3) to block flow through said branch opening (4),
a clamp part (7), wherein that said saddle part (3) and said clamp part (7) are formed to encircle said pipe (2), said saddle part (3) being connected to said clamp part (7),
an upper insertion part (10) being upper in relation to said pipe (2),
an upper gasket (8) arranged to encircle a through-going upper insertion opening (9) in said upper insertion part (10),
a lower insertion part (13) being lower in relation to said pipe (2), and
an lower gasket (11) arranged to encircle a through-going lower insertion opening (12) in said lower insertion part (13),
wherein said upper insertion part (10) comprising said upper gasket (8) and said lower insertion part (13) comprising said lower gasket (11) are arranged in axial succession of each other in said through-going branch opening (4) so that said branch opening (4) is substantially aligned with said upper insertion opening (9) and said lower insertion opening (12) and wherein said upper gasket (8) and said lower gasket (11) are substantially aligned with said spatula opening (5) so that said spatula means (6) may be inserted between said upper gasket (8) and said lower gasket (11).

2. A tapping connector (1) according to claim 1, wherein said upper insertion part (10) comprises a substantially radial extending upper abutting face (14) adapted to abut a corresponding substantially radial extending lower abutting face (15) on said lower insertion part (13).

3. A tapping connector (1) according to claim 1 or 2, wherein said tapping connector (1) further comprises a bottom gasket (16) arranged to seal a bottom gap (17) between said lower insertion part (13) and said pipe (2).

4. A tapping connector (1) according to one or more of the preceding claims, wherein said upper gasket (8) and said lower gasket (11) are arranged to face each other between said upper insertion part (10) and said lower insertion part (13) in said through-going branch opening (4).

5. A tapping connector (1) according to one or more of the preceding claims, wherein said tapping connector (1) comprises upper sealing means (18) arranged in an upper gap (19) between said upper insertion part (10) and said saddle part (3) to seal said upper gap (19).

6. A tapping connector (1) according to one or more of the preceding claims, wherein said upper insertion part (10) and said lower insertion part (13) comprise a mutual insertion part rotational interlocking arrangement (20) substantially preventing said upper insertion part (10) and said lower insertion part (13) from rotating in relation to each other.

7. A tapping connector (1) according to one or more of the preceding claims, wherein said upper insertion part (10) and/or said lower insertion part (13) comprises a saddle part rotational interlocking arrangement (21) substantially preventing said upper insertion part (10) and/or said lower insertion part (13) from rotating in relation to said saddle part (3).

8. A tapping connector (1) according to one or more of the preceding claims, wherein said lower insertion part (13) comprises an axial movement locking device (22) substantially locking said lower insertion part (13) from axial movements in relation to said through-going branch opening (4) in said saddle part (3).

9. A tapping connector (1) according to one or more of the preceding claims, wherein said lower insertion part (13) and/or said upper insertion part (10) are formed by injection moulding.

10. A tapping connector (1) according to one or more of the preceding claims, wherein said saddle part (3) and said clamp part (7) completely encircles said pipe (2).

11. A tapping connector (1) according to one or more of the preceding claims, wherein at least an upper part (23) of said through-going branch opening (4) comprises internal thread (24) for connecting to drilling equipment (25) and/or a branch pipe (26).

12. A tapping connector (1) according to one or more of the preceding claims, wherein said upper insertion part (10) and said lower insertion part (13) extends substantially all the way through said through-going branch opening (4).

13. A tapping connector (1) according to claim 12, wherein at least an upper part (27) of said upper insertion part (10) comprises internal thread (24) for connecting to drilling equipment (25) and/or a branch pipe (26).

14. A tapping connector (1) according to one or more of the preceding claims, wherein at least an upper part (23) of said through-going branch opening (4) comprises threadless connection means for connecting to drilling equipment (25) and/or a branch pipe (26).

15. Use of a tapping connector (1) according to any of the preceding claims in which said tapping connector (1) is used for mounting and tapping a pipe (2) comprising pressurized fluid.

## Patentansprüche

1. Anbohrschelle (1) für die Montage auf und das Anbohren einer Leitung (2), wobei die Schelle (1) Folgendes umfasst:
einen Sattelteil (3), der eine durchgehende Abzweigöffnung (4) und eine Spachtelöffnung (5) umfasst,
ein Spachtelmittel (6), das dafür eingerichtet ist, in den Sattelteil (3) eingeführt zu werden, um einen Fluss durch die Abzweigöffnung (4) zu sperren,
einen Schellenteil (7), wobei der Sattelteil (3) und der Schellenteil (7) dafür ausgebildet sind, die Leitung (2) zu umfassen, und wobei der Sattelteil (3) mit dem Schellenteil (7) verbunden ist,
ein oberes Einfügungsteil (10), das oben in Bezug auf die Leitung (2) ist,
eine obere Dichtung (8), die dafür eingerichtet ist, eine durchgehende obere Einführungsöffnung (9) im oberen Einfügungsteil (10) zu umgeben,
ein unteres Einfügungsteil (13), das unten in Bezug auf die Leitung (2) ist, und
eine untere Dichtung (11), die dafür eingerichtet ist, eine durchgehende untere Einführungsöffnung (12) im unteren Einfügungsteil (13) zu umgeben,
wobei das obere Einfügungsteil (10), das die obere Dichtung (8) umfasst, und das untere Einfügungsteil (13), das die untere Dichtung (11) umfasst, in der durchgehenden Abzweigöffnung (4) axial aufeinanderfolgend angeordnet sind, derart, dass die Abzweigöffnung (4) im Wesentlichen mit der oberen Einführungsöffnung (9) und der unteren Einführungsöffnung (12) ausgerichtet ist, und wobei die obere Dichtung (8) und die untere Dichtung (11) im Wesentlichen mit der Spachtelöffnung (5) ausgerichtet sind, derart, dass das Spachtelmittel (6) zwischen der oberen Dichtung (8) und der unteren Dichtung (11) eingeführt werden kann.

2. Anbohrschelle (1) nach Anspruch 1, wobei das obere Einfügungsteil (10) eine sich im Wesentlichen radial erstreckende obere Auflagefläche (14) umfasst, die dafür eingerichtet ist, an einer zugehörigen sich im Wesentlichen radial erstreckenden unteren Auflagefläche (15) am unteren Einfügungsteil (13) aufzuliegen.

3. Anbohrschelle (1) nach Anspruch 1 oder 2, wobei die Anbohrschelle (1) außerdem eine Unterkantendichtung (16) umfasst, die dafür eingerichtet ist, eine Unterkantenlücke (17) zwischen dem unteren Einfügungsteil (13) und der Leitung (2) abzudichten.

4. Anbohrschelle (1) nach einem oder mehreren der vorhergehenden Ansprüchen, wobei die obere Dichtung (8) und die untere Dichtung (11) dafür eingerichtet sind, zwischen dem oberen Einfügungsteil (10) und dem unteren Einfügungsteil (13) in der durchgehenden Abzweigöffnung (4) einander zugewandt zu sein.

5. Anbohrschelle (1) nach einem oder mehreren der vorhergehenden Ansprüche, wobei die Anbohrschelle (1) ein oberes Dichtungsmittel (18) umfasst, das in einer oberen Lücke (19) zwischen dem oberen Einfügungsteil (10) und dem Sattelteil (3) angeordnet ist, um die obere Lücke (19) abzudichten.

6. Anbohrschelle (1) nach einem oder mehreren der vorhergehenden Ansprüche, wobei das obere Einfügungsteil (10) und das untere Einfügungsteil (13) eine Einfügungsteil-Einrichtung (20) zur gegenseitigen Verdrehungssperre umfassen, die im Wesentlichen verhindert, dass das obere Einfügungsteil (10) und das untere Einfügungsteil (13) sich zueinander verdrehen.

7. Anbohrschelle (1) nach einem oder mehreren der vorhergehenden Ansprüche, wobei das obere Einfügungsteil (10) und/oder das untere Einfügungsteil (13) eine Sattelteil-Einrichtung (21) zur Verdrehungssperre umfasst, die im Wesentlichen verhindert, dass das obere Einfügungsteil (10) und/oder das untere Einfügungsteil (13) sich gegenüber dem Sattelteil (3) verdrehen.

8. Anbohrschelle (1) nach einem oder mehreren der vorhergehenden Ansprüche, wobei das untere Einfügungsteil (13) eine Blockiervorrichtung für axiale Bewegungen (22) umfasst, die das untere Einfügungsteil (13) im Wesentlichen gegenüber axialen Bewegungen in Bezug auf die durchgehende Abzweigöffnung (4) im Sattelteil (3) blockiert.

9. Anbohrschelle (1) nach einem oder mehreren der vorhergehenden Ansprüche, wobei das untere Einfügungsteil (13) und/oder das obere Einfügungsteil (10) durch Spritzgießen gebildet werden.

10. Anbohrschelle (1) nach einem oder mehreren der vorhergehenden Ansprüche, wobei der Sattelteil (3) und der Schellenteil (7) die Leitung (2) vollständig umgeben.

11. Anbohrschelle (1) nach einem oder mehreren der vorhergehenden Ansprüche, wobei wenigstens ein oberer Teil (23) der durchgehenden Abzweigöffnung (4) ein Innengewinde (24) zur Verbindung mit einer Bohrausrüstung (25) und/oder einer Zweigleitung (26) umfasst.

12. Anbohrschelle (1) nach einem oder mehreren der vorhergehenden Ansprüche, wobei das obere Einfügungsteil (10) und das untere Einfügungsteil (13) sich im Wesentlichen vollständig durch die durchgehende Abzweigöffnung (4) erstrecken.

13. Anbohrschelle (1) nach Anspruch 12, wobei wenigstens ein oberer Teil (27) des oberen Einfügungsteils (10) ein Innengewinde (24) zur Verbindung mit einer Bohrausrüstung (25) und/oder einer Zweigleitung (26) umfasst.

14. Anbohrschelle (1) nach einem oder mehreren der vorhergehenden Ansprüche, wobei wenigstens ein oberer Teil (23) der durchgehenden Abzweigöffnung (4) ein gewindeloses Verbindungsmittel zur Verbindung mit einer Bohrausrüstung (25) und/oder einer Zweigleitung (26) umfasst.

15. Verwendung einer Anbohrschelle (1) nach einem der vorhergehenden Ansprüche, bei der die Anbohrschelle (1) zur Montage und Anbohren einer Leitung (2) verwendet wird, die ein unter Druck stehendes Fluid umfasst.

## Revendications

1. Connecteur de piquage (1) pour le montage et le piquage d'un tuyau (2), ledit connecteur (1) comprenant
une partie de selle (3) incluant une ouverture de branchement débouchante (4) et une ouverture de spatule (5),
des moyens de spatule (6) agencés pour être insérés dans ladite partie de selle (3) pour bloquer le flux par ladite ouverture de branchement (4),
une partie de serrage (7), dans lequel cette dite partie de selle (3) et dite partie de serrage (7) sont formées pour encercler ledit tuyau (2), ladite partie de selle (3) étant reliée à ladite partie de serrage (7),
une partie d'insertion supérieure (10) étant supérieure par rapport audit tuyau (2),
un joint supérieur (8) agencé pour encercler une ouverture d'insertion supérieure débouchante (9) dans ladite partie d'insertion supérieure (10),
une partie d'insertion inférieure (13) étant inférieure par rapport audit tuyau (2) et un joint inférieur (11) agencé pour encercler une ouverture d'insertion inférieure débouchante (12) dans ladite partie d'insertion inférieure (13),
dans lequel ladite partie d'insertion supérieure (10) comprenant ledit joint supérieur (8) et ladite partie d'insertion inférieure (13) comprenant ledit joint inférieur (11) sont agencées en succession axiale l'une de l'autre dans ladite ouverture de branchement débouchante (4) de sorte que ladite ouverture de branchement (4) soit sensiblement alignée sur ladite ouverture d'insertion supérieure (9) et ladite ouverture d'insertion inférieure (12) et dans lequel ledit joint supérieur (8) et ledit joint inférieur (11) sont sensiblement alignés sur ladite ouverture de spatule (5) de sorte que lesdits moyens de spatule (6) puissent être insérés entre ledit joint supérieur (8) et ledit joint inférieur (11).

2. Connecteur de piquage (1) selon la revendication 1, dans lequel ladite partie d'insertion supérieure (10) comprend une face de butée supérieure s'étendant sensiblement radialement (14) adaptée pour buter contre une face de butée inférieure correspondante s'étendant sensiblement radialement (15) sur ladite partie d'insertion inférieure (13).

3. Connecteur de piquage (1) selon la revendication 1 ou 2, dans lequel ledit connecteur de piquage (1) comprend en outre un joint inférieur (16) agencé pour rendre étanche une fente inférieure (17) entre ladite partie d'insertion inférieure (13) et ledit tuyau (2).

4. Connecteur de piquage (1) selon l'une ou plusieurs des revendications précédentes, dans lequel ledit joint supérieur (8) et ledit joint inférieur (11) sont agencés pour se faire face entre ladite partie d'insertion supérieure (10) et ladite partie d'insertion inférieure (13) dans ladite ouverture de branchement débouchante (4).

5. Connecteur de piquage (1) selon l'une ou plusieurs des revendications précédentes, dans lequel ledit connecteur de piquage (1) comprend des moyens étanches supérieurs (18) agencés dans une fente supérieure (19) entre ladite partie d'insertion supérieure (10) et ladite partie de selle (3) pour rendre étanche ladite fente supérieure (19).

6. Connecteur de piquage (1) selon l'une ou plusieurs des revendications précédentes, dans lequel ladite partie d'insertion supérieure (10) et ladite partie d'insertion inférieure (13) comprennent un agencement d'interverrouillage rotatif de partie d'insertion mutuelle (20) empêchant sensiblement ladite partie d'insertion supérieure (10) et ladite partie d'insertion inférieure (13) de tourner l'une par rapport à l'autre.

7. Connecteur de piquage (1) selon l'une ou plusieurs des revendications précédentes, dans lequel ladite partie d'insertion supérieure (10) et/ou ladite partie d'insertion inférieure (13) comprend un agencement d'interverrouillage rotatif de partie de selle (21) empêchant sensiblement ladite partie d'insertion supérieure (10) et/ou ladite partie d'insertion inférieure (13) de tourner par rapport à ladite partie de selle (3).

8. Connecteur de piquage (1) selon l'une ou plusieurs des revendications précédentes, dans lequel ladite partie d'insertion inférieure (13) comprend un dispositif de verrouillage de mouvement axial (22) bloquant sensiblement ladite partie d'insertion inférieure (13) de tout mouvement axial par rapport à ladite ouverture de branchement débouchante (4) dans ladite partie de selle (3).

9. Connecteur de piquage (1) selon l'une ou plusieurs des revendications précédentes, dans lequel ladite partie d'insertion inférieure (13) et/ou ladite partie d'insertion supérieure (10) sont formées par moulage par injection.

10. Connecteur de piquage (1) selon l'une ou plusieurs des revendications précédentes, dans lequel ladite partie de selle (3) et ladite partie de serrage (7) encerclent complètement ledit tuyau (2).

11. Connecteur de piquage (1) selon l'une ou plusieurs des revendications précédentes, dans lequel au moins une partie supérieure (23) de ladite ouverture de branchement débouchante (4) comprend un filet interne (24) pour la liaison avec l'équipement de forage (25) et/ou un tuyau de branchement (26).

12. Connecteur de piquage (1) selon l'une ou plusieurs des revendications précédentes, dans lequel ladite partie d'insertion supérieure (10) et ladite partie d'insertion inférieure (13) s'étendent sensiblement tout du long au travers de ladite ouverture de branchement débouchante (4).

13. Connecteur de piquage (1) selon la revendication 12, dans lequel au moins une partie supérieure (27) de ladite partie d'insertion supérieure (10) comprend un filet interne (24) pour la liaison avec l'équipement de forage (25) et/ou un tuyau de branchement (26).

14. Connecteur de piquage (1) selon l'une ou plusieurs des revendications précédentes, dans lequel au moins une partie supérieure (23) de ladite ouverture de branchement débouchante (4) comprend des moyens de connexion sans filet pour la liaison avec l'équipement de forage (25) et/ou un tuyau de branchement (26).

15. Utilisation d'un connecteur de piquage (1) selon l'une quelconque des revendications précédentes, dans laquelle ledit connecteur de piquage (1) est utilisé pour le montage et le piquage d'un tuyau (2) comprenant du fluide pressurisé.
